# EUROPEAN PATENT SPECIFICATION

(11) **EP 2 415 658 B1**
(45) Date of publication and mention of the grant of the patent: **27.11.2013**
(21) Application number: 10008092.8
(22) Date of filing: 03.08.2010
(51) Int. Cl.: B62J 6/00

(54) **Multifunction power supplying device for a bicycle**
Multifunktions-Energieversorgungsvorrichtung für ein Fahrrad
Dispositif d'alimentation électrique multifonction pour bicyclette

(43) Date of publication of application: 08.02.2012
(73) Proprietor: Marwi Taiwan Industrial Co., Ltd., Ta-Chia T'ai chung (TW)
(72) Inventor: Pai, Cheng-Chung, Ta-Chia, Taichung (TW)
(74) Representative: Samson & Partner

(56) References cited:
- EP-A1- 1 520 773
- EP-A1- 2 082 952
- DE-A1- 4 337 456
- DE-A1-102006 008 927
- DE-U1- 29 819 852
- US-A1- 2005 281 020

## Description

The invention relates to a power supplying device, and more particularly to a multifunction power supplying device for a bicycle.

A bicycle is generally equipped with head and tail lamps that are supplied with electric power from respective batteries. Replacement of the batteries is required when power has been exhausted, thereby resulting in inconvenience.

In order to overcome the above disadvantage, electric power supplied to the head and tail lamps is generated by means of additional electricity-generating equipment, e.g., an electricity-generating wheel hub or a solar power collecting plate mounted on the bicycle. However, such electricity-generating equipment cannot ensure a stable supply of electric power to the head and tail lamps.

DE 10 2006 008 927 A1 describes a circuit for an accumulator-based power supplying device with a charging automatic and a switch control. The document discloses the features of the preamble of claim 1. Further, the document describes an output port to which external devices, such as a discman, an MP3 player, a cell phone, a camera and a GPS navigator may be connected.

EP 1 520 773 A1 describes an electrical component holder for a bicycle which is coupled with a dynamo via a connecting cord. The electrical component holder comprises a housing, an input portion, a regulator circuit and an output portion. The housing is mountable on a frame or handlebar. The input portion is disposed on the housing.

EP 2 082 952 A1 describes a portable safety, entertainment and communication device for bicycles and a control method.

Therefore, an object of the present invention is to provide a multifunction power supplying device that can overcome the aforesaid disadvantages of the prior art.

According to the present invention, there is provided a multifunction power supplying device for a bicycle. The multifunction power supplying device comprises:
a base unit including
a base body adapted to be mounted on a bicycle frame of the bicycle,
a power input port provided on the base body and adapted for receiving external electric power, and
at least one power output port provided on the base body and adapted to be connected electrically to a lamp set that is mounted on the bicycle frame; and a control unit including
a hollow housing connected detachably to the base body of the base unit,
a rechargeable battery disposed in the housing, and
a controller disposed in the housing and coupled to the rechargeable battery, the controller being connected electrically to the power input port and the power output port of the base unit when the housing is connected to the base body of the base unit.
When the housing of the control unit is connected to the base body of the base unit, the controller of the control unit is operable to supply electric power from the rechargeable battery to the lamp set through the power output port of the base unit, and to charge the rechargeable battery with the external electric power from the power input port of the base unit.

Other features and advantages of the present invention will become apparent in the following detailed description of the preferred embodiments with reference to the accompanying drawings, of which:
Figure 1 is a schematic circuit block diagram illustrating the first preferred embodiment of a multifunction power supplying device according to the present invention;
Figure 2 is a partly exploded perspective view showing the first preferred embodiment without a power switch module;

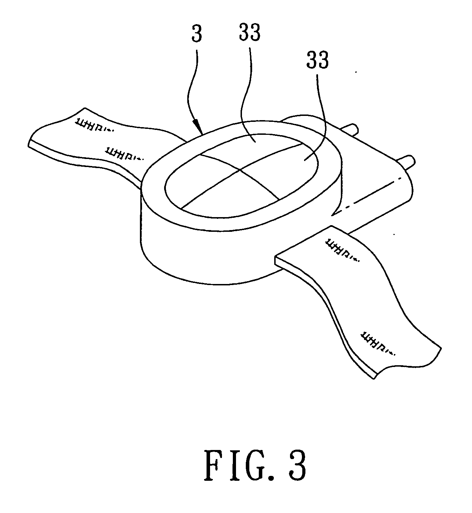

Figure 3 is a perspective view showing a power switch module of the first preferred embodiment;
Figure 4 is a perspective view showing an assembly of a base unit and a control unit of the first preferred embodiment;
Figure 5 is a schematic view showing the first preferred embodiment when used with a bicycle;
Figure 6 is an assembled perspective view showing the second preferred embodiment of a multifunction power supplying device according to the present invention without a power switch module;
Figure 7 is a schematic circuit block diagram illustrating a control unit of the second preferred embodiment;
Figure 8 is a schematic view showing the control unit of the second preferred embodiment when in a state of use; and
Figure 9 is a schematic view showing the control unit of the second preferred embodiment when in another state of use.

Before the present invention is described in greater detail, it should be noted that like elements are denoted by the same reference numerals throughout the disclosure.

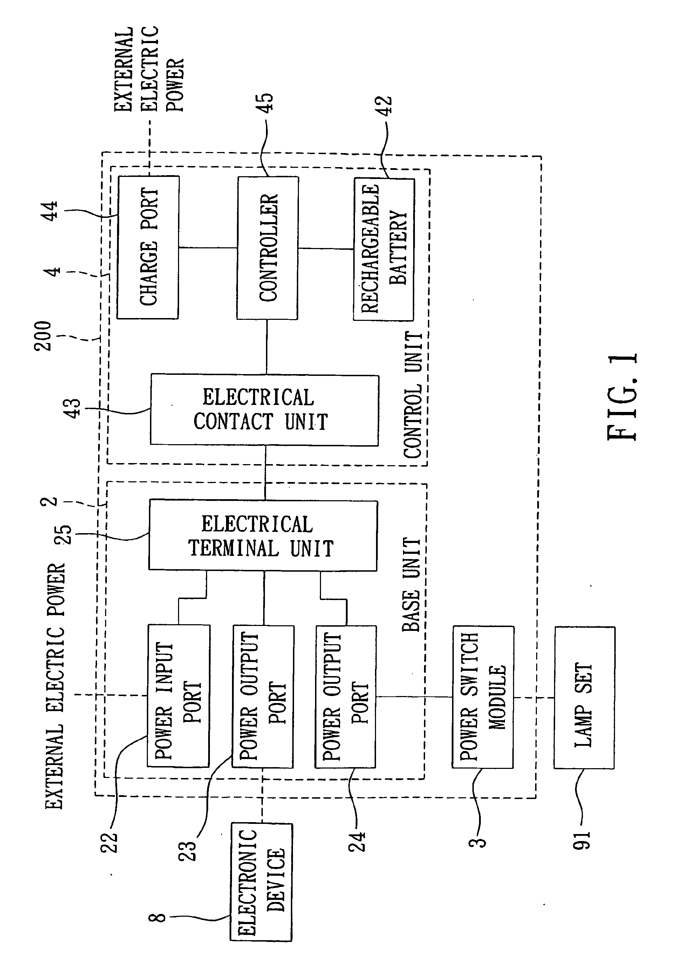

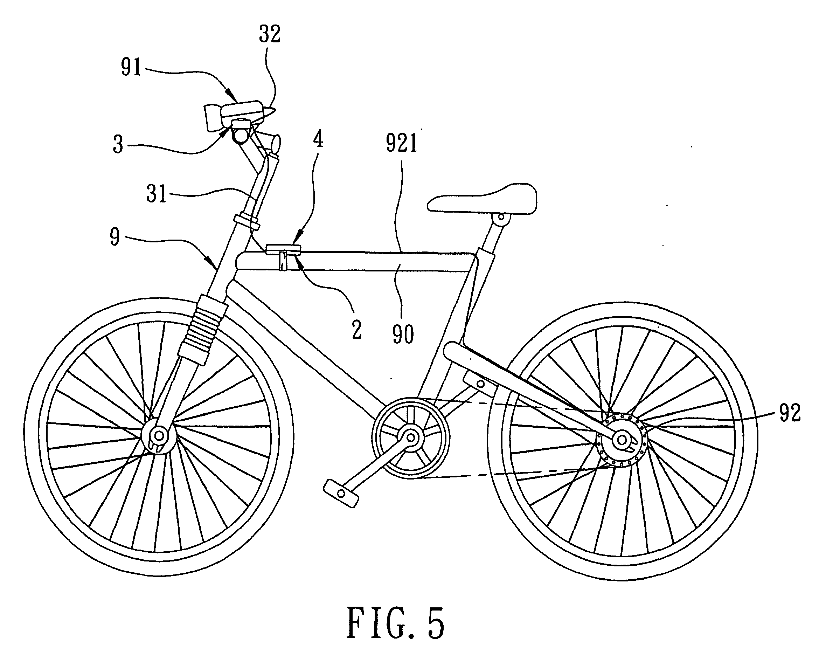

Referring to Figures 1 and 5, the first preferred embodiment of a multifunction power supplying device 200 for a bicycle 9 according to the present invention is shown to include a base unit 2, a control unit 4, and a power switch module 3. The bicycle 9 includes a bicycle frame 90, and is equipped with a lamp set 91 mounted on the bicycle frame 90. In this embodiment, the lamp set 91 includes a plurality of lamps, such as a head lamp, a tail lamp, etc. (only the head lamp is shown in Figure 5).

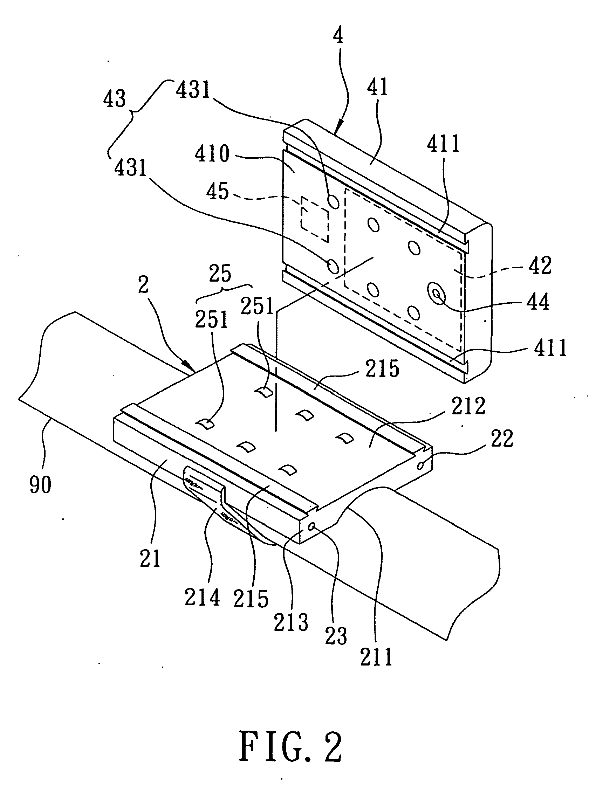

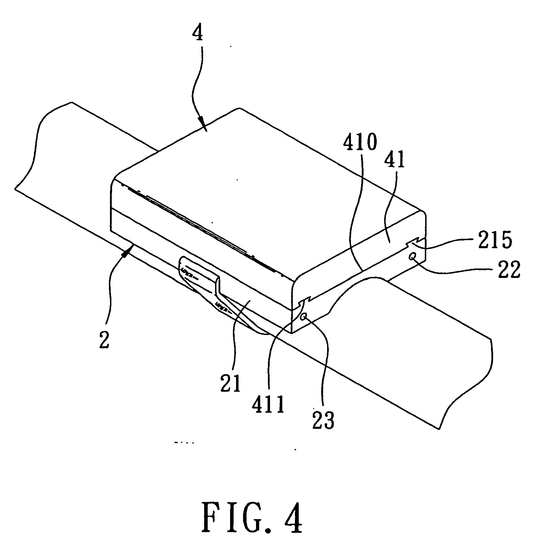

Referring further to Figures 2 and 4, the base unit 2 includes a base body 21, a power input port 22, two power output ports 23, 24 (only the power output port 23 is shown), and an electrical terminal unit 25.

In this embodiment, the base body 21 has a first side surface 211 adapted to be disposed on the bicycle frame 90, a second side surface 212 opposite to the first side surface 211, and a surrounding surface 213 interconnecting the first and second side surfaces 211, 212. The base body 21 includes a fastener 214 provided on the surrounding surface 213 for anchoring the base body 21 to the bicycle frame 90, and opposite engaging blocks 215 projecting from the second side surface 212.

The power input port 22 and the power output ports 23, 24 are provided on the surrounding surface 213 of the base body 21. The power input port 22 is adapted to receive external electric power generated by an electricity-generating wheel hub 92 of the bicycle 9 or a solar power collecting plate (not shown) and transmitted through an electrical wire 921 (see Figure 5) . The power output port 23 is adapted to be connected electrically and wiredly to an electronic device 8, such as a mobile phone, a music player or a GPS (global positioning system) device.

The electrical terminal unit 25 is provided on the second side surface 212 of the base body 21, and includes a plurality of electrical terminals 251. Each of the power input port 22 and the power output ports 23, 24 is coupled to a corresponding pair of the electrical terminals 251.

The control unit 4 includes a hollow housing 41, a rechargeable battery 42, an electrical contact unit 43, a charge port 44, and a controller 45.

The housing 41 is connected detachably to the base body 21 of the base unit 2. In this embodiment, the housing 41 has a mounting surface 410 formed with opposite engaging grooves 411 that engage respectively and releasably the engaging blocks 215 of the base body 21, thereby connecting the housing 41 and the base body 21 of the base unit 2, as shown in Figure 4. In this case, the housing 41 is stacked on the base body 21.

The rechargeable battery 42 is disposed in the housing 41.

The electrical contact unit 43 is provided on the mounting surface 410 of the housing 41, and includes a plurality of electrical contacts 431 that are respectively in electrical contact with the electrical terminal 251 of the base unit 2 when the housing 41 is connected to the base body 21.

The controller 45 is disposed in the housing 41, and is coupled to the rechargeable battery 42 and the electrical contact unit 43. The controller 45 is connected electrically to the power input port 22 and the power output ports 23, 24 through the electrical contact unit 43 and the electrical terminal unit 25 of the base unit 2 when the housing 41 is connected to the base body 21 such that the controller 45 is operable to supply electric power from the rechargeable battery 42 to the power output port 23, 24 of the base unit 2 and to charge the rechargeable battery 42 with the external electric power from the power input port 22 of the base unit 2. Thus, the electric power from the rechargeable battery 42 can be supplied to the electronic device 8 connected electrically to the power output port 23.

In this embodiment, the charge port 44 is provided on the mounting surface 410 of the housing 41, and is adapted to receive another external electric power from a power source (not shown). In use, when the housing 41 separates from the base body 21 of the base unit 2, the controller 45 is operable to charge the rechargeable battery 42 with the external electric power from the charge port 44.

As shown in Figure 5, the power switch module 3 is connected electrically and detachably between the power output port 24 and the lamp set 91 through electrical wires 31, 32, and is adapted to be mounted on the bicycle frame 90. The power switch module 3 is manually operable to control conduction or non-conduction between the power output port 24 and the lamp set 91 such that the electric power from the power output port 24 is supplied to the lamp set 91 through the power switch module 3 upon conduction between the power output port 24 and the lamp set 91. In this embodiment, the power switch module 3 includes a plurality of control keys 33. Activation or deactivation of each lamp of the lamp set 91 is performed in response to operation of a corresponding control key 33.

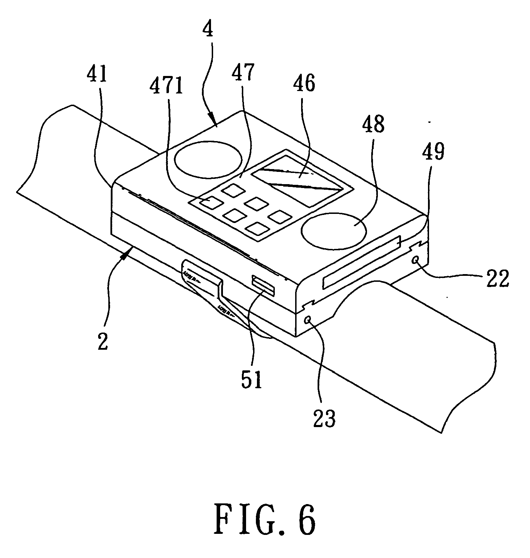

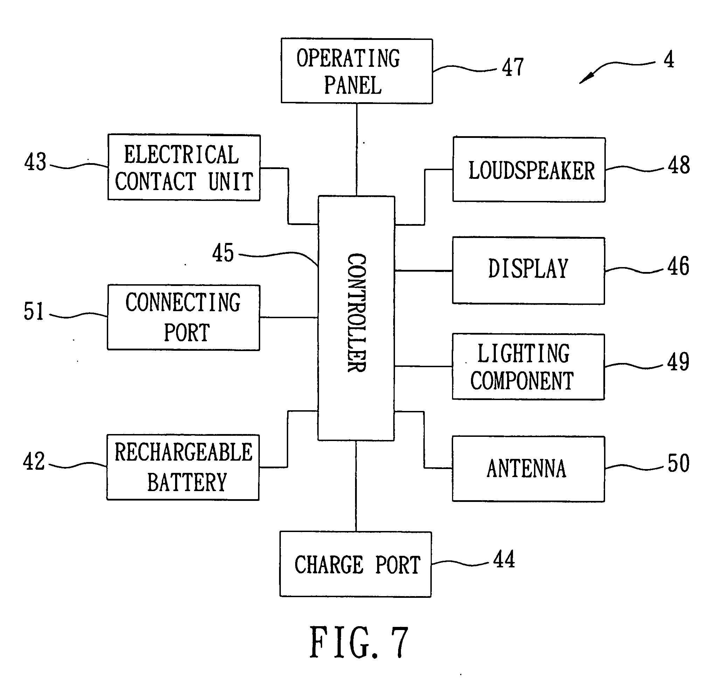

Figures 6 and 7 illustrate the second preferred embodiment of a multifunction power supplying device 200 for a bicycle according to this invention, which is a modification of the first preferred embodiment. Unlike the previous embodiment, the control unit 4 further includes an operating panel 47, a display 46, a loudspeaker 48, a lighting component 49, an antenna 50, and a connecting port 51.

The operating panel 47 is disposed on the housing 41, is coupled to the controller 45, and is manually operable to output a control signal to the controller 45. In this embodiment, the operating panel 47 includes a plurality of operating keys 471. The control signal corresponds to operation of a selected one of the operating keys 471.

The controller 45 receives the control signal from the operating panel 47, and operates based on the control signal received thereby. In this embodiment, the controller 45 pre-stores a plurality of music files therein.

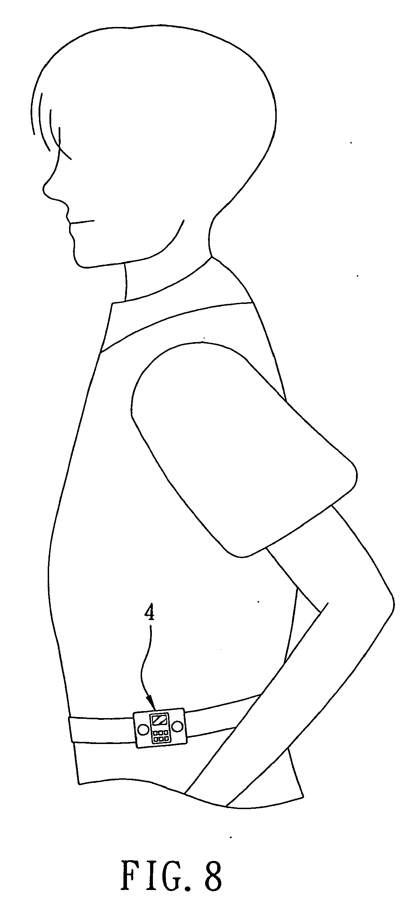

The loudspeaker 48 is mounted to the housing 41, and is coupled to the controller 45. The controller 45 is operable to enable the loudspeaker 48 to reproduce the music files stored in the controller 45 in response to the control signal received thereby that corresponds to operation of a corresponding operating key 471. Therefore, when the control unit 4 is individually used, the control unit 4 can be carried by a user and serves as a music player, as shown in Figure 8. On the other hand, the controller 45 is operable to enable the loudspeaker 48 to generate an audio alarm output in response to the control signal received thereby that corresponds to operation of a corresponding operating key 471. Therefore, the control unit 4 can serve as an alarm.

The display 46 is mounted on the housing 41, is coupled to and controlled by the controller 45 for displaying thereon information associated with operation of the controller 45.

The lighting component 49 is mounted on the housing 41, and is coupled to the controller 45. The controller 45 is operable to enable the lighting component 49 to emit light in response to the control signal received thereby that corresponds to operation of a corresponding operating key 471. Therefore, when the control unit 4 is individually used, the control unit 4 can serve as an illumination device.

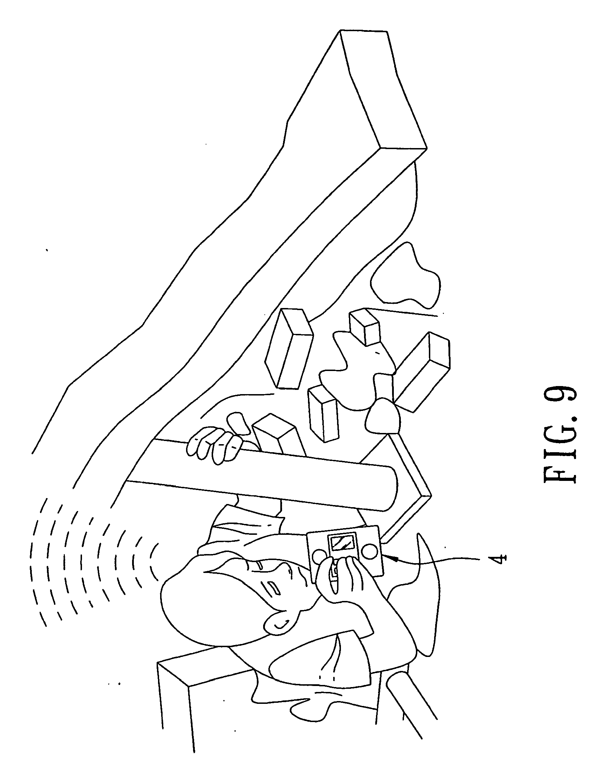

The antenna 50 is coupled to the controller 45. The controller 45 is operable to transmit a radio signal through the antenna 50 in response to the control signal received thereby that corresponds to operation of a corresponding operating key 471. Therefore, when the control unit 4 is individually used, the control unit 4 can serve as a radio transmitter. For example, a person in a dangerous situation, (e.g., someone trapped in a building toppled by an earthquake) can use the control unit 4 to transmit the radio signal, which can serve as an SOS signal, as shown in Figure 9.

The connecting port 51, such as a USB connecting port, is mounted on the housing 41 and is coupled to the controller 45. The connecting port 51 can serve as a charge port or a data transmission port.

In sum, the multifunction power supplying device 200 of the present invention can ensure stable supply of electric power to the lamp set 91 and the electronic device 8. Furthermore, when the control unit 4 separates from the base unit 2, the control unit 4 can serve as various electronic appliances with different functions.

## Claims

1. A multifunction power supplying device (200) for a bicycle (9), comprising:
a base unit (2) including
a base body (21) adapted to be mounted on a bicycle frame (90) of the bicycle (9),
a power input port (22) provided on said base body (21) and adapted for receiving external electric power, and
at least one power output port (24) provided on said base body (21) and adapted to be connected electrically to a lamp set (91) that is mounted on the bicycle frame (90); and
a control unit (4) including
a hollow housing (41) connected detachably to said base body (21) of said base unit (2),
a rechargeable battery (42) disposed in said housing (41), and
a controller (45) disposed in said housing (41) and coupled to said rechargeable battery (42), said controller (45) being connected electrically to said power input port (22) and said power output port (24) of said base unit (2) when said housing (41) is connected to said base body (21) of said base unit (2);
wherein, when said housing (41) of said control unit (4) is connected to said base body (21) of said base unit (2), said controller (45) of said control unit (4) is operable to supply electric power from said rechargeable battery (42) to the lamp set (91) through said power output port (24) of said base unit (2), and to charge said rechargeable battery (42) with the external electric power from said power input port (22) of said base unit (2);
**characterized in that** said control unit (4) further includes an operating panel (47) disposed on said housing (41), coupled to said controller (45), and manually operable to output a control signal to said controller (45); and
said controller (45) of said control unit (4) receives the control signal from said operating panel (47), and operates based on the control signal received thereby; and
wherein said controller (45) of said control unit (4) pre-stores a plurality of music files therein; and
said control unit (4) further includes a loudspeaker (49) mounted to said housing (41) and coupled to said controller (45), said controller (45) being operable to enable said loudspeaker (48) to reproduce the music files stored in said controller (45) in response to the control signal received thereby.

2. The multifunction power supplying device (200) as claimed in claim 1, **characterized in that**:
said base unit (2) further includes an electrical terminal unit (25) disposed on said base body (21) and having a plurality of electrical terminals (251), each of said power input port (22) and said power output port (24) being coupled to a corresponding pair of said electrical terminals (251); and
said control unit (4) further includes an electrical contact unit (43) disposed on said housing (41), connected electrically to said controller (45) and having a plurality of electrical contacts (431) that are respectively in electrical contact with said electrical terminals (251) of said base unit (2) when said housing (41) is connected to said base body (21) of said base unit (2), thereby connecting electrically said controller (45) of said control unit (4) with said power input port (22) and said power output port (24) of said base unit (2).

3. The multifunction power supply device (200) as claimed in claim 2, further **characterized in that**:
said base body (21) of said base unit 82) has a first side surface (211) adapted to be disposed on the bicycle frame (90), a second side surface (212) opposite to said first side surface (211) and provided with said electrical terminals (251) thereon, and a surrounding surface (213) interconnecting said first and second side surfaces (211, 212) and provided with said power input port (22) and said power output port (24), said base body (21) including a fastener (214) provided on said surrounding surface (213) for anchoring said base body (21) to the bicycle frame (90), and opposite engaging blocks (215) projecting from said second side surface (212); and
said housing (41) of said control unit (4) has a mounting surface (410) provided with said electrical contacts (431) thereon and formed with opposite engaging grooves (411) that engage respectively and releasably said engaging blocks (215) of said base body (21) of said base unit (2), thereby connecting said housing (41) of said control unit (4) and said base body (21) of said base unit (2).

4. The multifunction power supply device (200) as claimed in claim 1, further **characterized by** a power switch module (3) connected electrically and detachably between said power output port (24) and the lamp set (91), and adapted to be mounted on the bicycle frame (90), said power switch module (3) being manually operable to control conduction or non-conduction between said power output port (24) and the lamp set (91) such that the electric power from said rechargeable battery (42) is supplied to the lamp set (91) through said power output port (24) and said power switch module (3) upon conduction between said power output port (24) and the lamp set (91).

5. The multifunction power supply device (200) as claimed in claim 1, **characterized in that** said control unit (4) further includes a charge port (44) provided on said housing (41), coupled to said controller (45) and adapted for receiving another external electric power such that said controller (45) is operable to charge said rechargeable battery (42) with the external electric power from said charge port (44).

6. The multifunction power supply device (200) as claimed in claim 1, further **characterized in that** said control unit (4) further includes a display (46) mounted on said housing (41), and coupled to and controlled by said controller (45) for displaying thereon information associated with operation of said controller (45).

7. The multifunction power supply device (200) as claimed in claim 1, further **characterized in that** said controller (45) of said control unit (4) is operable to enable said loudspeaker (48) to generate an audio alarm output in response to the control signal received thereby.

8. The multifunction power supply device (200) as claimed in claim 1, further **characterized in that** said controller unit (4) further includes a lighting component (49) mounted on said housing (41) and coupled to said controller (45), said controller (45) being operable to enable said lighting component (49) to emit light in response to the control signal received thereby.

9. The multifunction power supply device (200) as claimed in claim 1, further **characterized in that** said control unit (4) further includes an antenna (50) coupled to said controller (45), said controller being operable to transmit a radio signal through said antenna (50) in response to the control signal received thereby.

## Patentansprüche

1. Multifunktions-Stromversorgungseinrichtung (200) für ein Zweirad (9), umfassend:
eine Grundeinheit (2), aufweisend
einen Grundkörper (21), der dazu eingerichtet ist, an einem Zweiradrahmen (90) des Zweirads (9) angebracht zu werden,
einen Stromeingangsanschluss (22), der an dem Grundkörper (21) vorgesehen ist und dazu eingerichtet ist, externen elektrischen Strom zu empfangen, und
wenigstens einen Stromausgangsanschluss (24), der an dem Grundkörper (21) vorgesehen ist und dazu eingerichtet ist, elektrisch mit einem Leuchtensatz (91) verbunden zu werden, der an dem Zweiradrahmen (90) angebracht ist; und
eine Steuereinheit (4), aufweisend
ein hohles Gehäuse (41), das abnehmbar mit dem Grundkörper (21) der Grundeinheit (2) verbunden ist,
eine wiederaufladbare Batterie (42), die in dem Gehäuse (41) angeordnet ist, und
eine Steuerung (45), die in dem Gehäuse (41) angeordnet ist und mit der wiederaufladbaren Batterie (42) gekoppelt ist, wobei die Steuerung (45) elektrisch mit dem Stromeingangsanschluss (22) und dem Stromausgangsanschluss (24) der Grundeinheit (2) verbunden ist, wenn das Gehäuse (41) mit dem Grundkörper (21) der Grundeinheit (2) verbunden ist;
wobei, wenn das Gehäuse (41) der Steuereinheit (4) mit dem Grundkörper (21) der Grundeinheit (2) verbunden ist, die Steuerung (45) der Steuereinheit (4) betreibbar ist, elektrischen Strom von der wiederaufladbaren Batterie (42) an dem Leuchtensatz (91) durch den Stromausgangsanschluss (24) der Grundeinheit (2) bereitzustellen, und die wiederaufladbare Batterie (42) mit dem externen elektrischen Strom von dem Stromeingangsanschluss (22) der Grundeinheit (2) zu laden;
**dadurch gekennzeichnet, dass** die Steuereinheit (4) weiter ein Bedienungsfeld (47) aufweist, das an dem Gehäuse (41) angeordnet ist, das mit der Steuerung (45) gekoppelt ist und manuell zum Ausgeben eines Steuersignals an die Steuerung (45) betreibbar ist; und
die Steuerung (45) der Steuereinheit (4) das Steuersignal von dem Bedienungsfeld (47) empfängt, und basierend auf dem dadurch empfangenen Steuersignal betrieben wird; und
wobei die Steuerung (45) der Steuereinheit (4) mehrere Musikdateien darin vorspeichert; und
die Steuereinheit (4) weiter einen Lautsprecher (49) aufweist, der an dem Gehäuse (41) angebracht ist und mit der Steuerung (45) gekoppelt ist, wobei die Steuerung (45) zum Aktivieren des Lautsprechers (48) betreibbar ist, um die Musikdateien in Reaktion auf das dadurch empfangene Steuersignal wiederzugeben, die in der Steuerung (45) gespeichert sind.

2. Multifunktions-Stromversorgungseinrichtung (200) wie in Anspruch 1 beansprucht, **dadurch gekennzeichnet, dass**:
die Grundeinheit (2) weiter eine elektrische Anschlusseinheit (25) aufweist, die an dem Grundkörper (21) angeordnet ist und mehrere elektrische Anschlüsse (251) hat, wobei sowohl der Stromeingangsanschluss (22) als auch der Stromausgangsanschluss (24) mit einem entsprechenden Paar der elektrischen Anschlüsse (251) gekoppelt ist; und
die Steuereinheit (4) weiter eine elektrische Kontakteinheit (43) aufweist, die an dem Gehäuse (41) angeordnet ist, elektrisch mit der Steuerung (45) verbunden ist und mehrere elektrische Kontakte (431) hat, die entsprechend in elektrischen Kontakt mit den elektrischen Anschlüssen (251) der Grundeinheit (2) stehen, wenn das Gehäuse (41) mit dem Grundkörper (21) der Grundeinheit (2) verbunden ist, wobei dadurch die Steuerung (45) der Steuereinheit (4) elektrisch mit dem Stromeingangsanschluss (22) und dem Stromausgangsanschluss (24) der Grundeinheit (2) verbunden wird.

3. Multifunktions-Stromversorgungseinrichtung (200) wie in Anspruch 2 beansprucht, weiter **dadurch gekennzeichnet, dass**:
der Grundkörper (21) der Grundeinheit (2) eine erste Seitenfläche (211) hat, die dazu eingerichtet ist, an dem Zweiradrahmen (90) angeordnet zu werden, eine zweite Seitenfläche (212) gegenüberliegend zur der ersten Seitenfläche (211) und mit elektrischen Anschlüssen (251) darauf ausgestattet, und eine umgebende Fläche (213), die die erste und die zweite Seitenfläche (211, 212) miteinander verbindet und mit dem Stromeingangsanschluss (22) und dem Stromausgangsanschluss (24) ausgestattet ist, wobei der Grundkörper (21) ein Befestigungsmittel (241) aufweist, das auf der umgebenden Fläche (213) zum Verankern des Grundkörpers (21) an dem Zweiradrahmen (90) vorgesehen ist, und gegenüberliegende Eingreif-Blöcke (215), die von der zweiten Seitenfläche (212) vorstehen; und
das Gehäuse (41) der Steuereinheit (4) eine Befestigungsfläche (410) hat, die mit den elektrischen Kontakten (431) darauf ausgestattet ist und mit gegenüberliegenden Eingreif-Nuten (411) gebildet ist, die entsprechend lösbar in die Eingreif-Blöcke (215) des Grundkörpers (21) der Grundeinheit (2) greifen, wodurch das Gehäuse (41) der Steuereinheit (4) und der Grundkörper (211) der Grundeinheit (2) verbunden werden.

4. Multifunktions-Stromversorgungseinrichtung (200) wie in Anspruch 1 beansprucht, weiter durch ein Stromschaltmodul (3) gekennzeichnet, das elektrisch und abnehmbar zwischen dem Stromausgangsanschluss (24) und dem Leuchtensatz (91) verbunden und dazu eingereicht ist, an dem Zweiradrahmen (90) angebracht zu werden, wobei das Stromschaltmodul (3) manuell zur Steuerung eines leitenden Zustandes oder nicht-leitenden Zustandes zwischen dem Stromausgangsanschluss (24) und dem Leuchtensatz (91) derart betreibbar ist, dass der elektrische Strom von der wiederaufladbaren Batterie (42) zu dem Leuchtensatz (91) durch den Stromausgangsanschluss (24) und das Stromschaltmodul (3) nach Herstellung eines leitenden Zustandes zwischen dem Stromausgangsanschluss (24) und dem Leuchtensatz (91) geliefert wird.

5. Multifunktions-Stromversorgungseinrichtung (200) wie in Anspruch 1 beansprucht, **dadurch gekennzeichnet, dass** die Steuereinheit (4) weiter einen Ladeanschluss (44) aufweist, der an dem Gehäuse (41) vorgesehen ist, mit der Steuerung (45) gekoppelt ist und zum Empfang eines weiteren elektrischen Stromes eingerichtet, sodass die Steuerung (45) zum Laden der wiederaufladbaren Batterie (42) mit dem externen elektrischen Strom von dem Ladeanschluss (44) betreibbar ist.

6. Multifunktions-Stromversorgungseinrichtung (200) wie in Anspruch 1 beansprucht, weiter **dadurch gekennzeichnet, dass** die Steuereinheit (4) weiter eine Anzeige (46) aufweist, die an dem Gehäuse (41) angebracht ist, und mit der Steuerung (45) gekoppelt ist und von ihr gesteuert wird, um darauf Informationen anzuzeigen, die mit dem Betrieb der Steuerung (45) verknüpft sind.

7. Multifunktions-Stromversorgungseinrichtung (200) wie in Anspruch 1 beansprucht, weiter **dadurch gekennzeichnet, dass** die Steuerung (45) der Steuereinheit (4) betreibbar ist, um den Lautsprecher (48) zum Erzeugen einer Audioalarmausgabe in Reaktion auf das dadurch empfangene Steuersignal zu aktivieren.

8. Multifunktions-Stromversorgungseinrichtung (200) wie in Anspruch 1 beansprucht, weiter **dadurch gekennzeichnet, dass** die Steuereinheit (4) weiter eine Beleuchtungskomponente (49) aufweist, die an dem Gehäuse (41) angebracht ist und mit der Steuerung (45) gekoppelt ist, wobei die Steuerung (45) betreibbar ist, um die Beleuchtungskomponente (49) zu aktivieren, Licht in Reaktion auf das dadurch empfangene Steuersignal zu emittieren.

9. Multifunktions-Stromversorgungseinrichtung (200) wie in Anspruch 1 beansprucht, weiter **dadurch gekennzeichnet, dass** die Steuereinheit (4) weiter eine Antenne (50) aufweist, die mit der Steuerung (45) gekoppelt ist, wobei die Steuerung zum Übertragen eines Funksignals durch die Antenne (50) in Reaktion auf das dadurch empfangene Steuersignal betreibbar ist.

## Revendications

1. Dispositif d'alimentation électrique (200) pour une bicyclette (9), comprenant :
une unité de base (2) comprenant :
un corps de base (21) adapté pour être monté sur un cadre de bicyclette (90) de la bicyclette (9),
un orifice d'entrée de courant (22) prévu sur ledit corps de base (21) et adapté pour recevoir du courant électrique externe, et
au moins un orifice de sortie de courant (24) prévu sur ledit corps de base (21) et adapté pour être raccordé électriquement à un ensemble de phare (91) qui est monté sur le cadre de bicyclette (90) ; et
une unité de commande (4) comprenant :
un boîtier creux (41) raccordé de manière détachable audit corps de base (21) de ladite unité de base (2),
une batterie rechargeable (42) disposée dans ledit boîtier (41), et
un organe de commande (45) disposé dans ledit boîtier (41) et couplé à ladite batterie rechargeable (42), ledit organe de commande (45) étant raccordé électriquement audit orifice d'entrée de courant (22) et audit orifice de sortie de courant (24) de ladite unité de base (2) lorsque ledit boîtier (41) est raccordé audit corps de base (21) de ladite unité de base (2) ;
dans lequel, lorsque ledit boîtier (41) de ladite unité de commande (4) est raccordé audit corps de base (21) de ladite unité de base (2), ledit organe de commande (45) de ladite unité de commande (4) peut fonctionner pour amener le courant électrique de ladite batterie rechargeable (42) audit ensemble de phare (91) en passant par ledit orifice de sortie de courant (24) de ladite unité de base (2) et pour charger ladite batterie rechargeable (42) avec le courant électrique externe provenant dudit orifice de sortie de courant (22) de ladite unité de base (2) ;
**caractérisé en ce que** ladite unité de commande (4) comprend en outre un panneau de commande (47) disposé sur ledit boîtier (41), couplé audit organe de commande (45), et pouvant être actionné manuellement pour transmettre un signal de commande audit organe de commande (45) ; et
ledit organe de commande (45) de ladite unité de commande (4) reçoit le signal de commande dudit panneau de commande (47), et fonctionne en fonction du signal de commande reçu par ce dernier ; et
dans lequel ledit organe de commande (45) de ladite unité de commande (4) mémorise à l'avance une pluralité de fichiers de musique à l'intérieur de ce dernier ; et
ladite unité de commande (4) comprend en outre un haut-parleur (49) monté sur ledit boîtier (41) et couplé audit organe de commande (45), ledit organe de commande (45) pouvant fonctionner pour permettre audit haut-parleur (48) de reproduire les fichiers de musique mémorisés dans ledit organe de commande (45) en réponse au signal de commande reçu par ce dernier.

2. Dispositif d'alimentation électrique multifonction (200) selon la revendication 1, **caractérisé en ce que** :
ladite unité de base (2) comprend en outre une unité de borne électrique (25) disposée sur ledit corps de base (21) et ayant une pluralité de bornes électriques (251), chacun parmi ledit orifice d'entrée de courant (22) et ledit orifice de sortie de courant (24) étant couplé à une paire correspondante desdites bornes électriques (251) ; et
ladite unité de commande (4) comprend en outre une unité de contact électrique (43) disposée sur ledit boîtier (41), raccordée électriquement audit organe de commande (45) et ayant une pluralité de contacts électriques (431) qui sont respectivement en contact électrique avec lesdites bornes électriques (251) de ladite unité de base (2) lorsque ledit boîtier (41) est raccordé audit corps de base (21) de ladite unité de base (2), raccordant ainsi électriquement ledit organe de commande (45) de ladite unité de commande (4) avec ledit orifice d'entrée de courant (22) et ledit orifice de sortie de courant (24) de ladite unité de base (2).

3. Dispositif d'alimentation électrique multifonction (200) selon la revendication 2, **caractérisé en outre en ce que** :
ledit corps de base (21) de ladite unité de base (82) a une première surface latérale (211) adaptée pour être disposée sur le cadre de bicyclette (90), une seconde surface latérale (212) opposée à ladite première surface latérale (211) et prévue avec lesdites bornes électriques (251) sur cette dernière, et une surface périphérique (213) interconnectant lesdites première et seconde surfaces latérales (211, 212) et prévue avec ledit orifice d'entrée de courant (22) et ledit orifice de sortie de courant (24), ledit corps de base (21) comprenant une fixation (214) prévue sur ladite surface périphérique (213) pour ancrer ledit corps de base (21) au cadre de bicyclette (90) et des blocs de mise en prise opposés (215) faisant saillie de ladite seconde surface latérale (212) ; et
ledit boîtier (41) de ladite unité de commande (4) a une surface de montage (410) prévue avec lesdits contacts électriques (431) sur cette dernière et formée avec des rainures de mise en prise opposées (411) qui mettent en prise respectivement et de manière amovible lesdits blocs de mise en prise (215) dudit corps de base (21) de ladite unité de base (2), raccordant ainsi ledit boîtier (41) de ladite unité de commande (4) et ledit corps de base (21) de ladite unité de base (2).

4. Dispositif d'alimentation électrique multifonction (200) selon la revendication 1, **caractérisé en outre par** un module de commutateur de courant (3) raccordé électriquement et de manière détachable entre ledit orifice de sortie de courant (24) et l'ensemble de phare (91), et adapté pour être monté sur le cadre de bicyclette (90), ledit module de commutateur de courant (3) pouvant être actionné manuellement pour commander la conduction ou la non conduction entre ledit orifice de sortie de courant (24) et l'ensemble de phare (91) de sorte que le courant électrique provenant de ladite batterie rechargeable (42) est amené à l'ensemble de phare (91) en passant par ledit orifice de sortie de courant (24) et ledit module de commutateur de courant (3), suite à la conduction entre ledit orifice de sortie de courant (24) et l'ensemble de phare (91).

5. Dispositif d'alimentation électrique multifonction (200) selon la revendication 1, **caractérisé en ce que** ladite unité de commande (4) comprend en outre un orifice de charge (44) prévu sur ledit boîtier (41), couplé audit organe de commande (45) et adapté pour recevoir un autre courant électrique externe, de sorte que ledit organe de commande (45) peut fonctionner pour charger ladite batterie rechargeable (42) avec le courant électrique externe provenant dudit orifice de charge (44).

6. Dispositif d'alimentation électrique multifonction (200) selon la revendication 1, **caractérisé en outre en ce que** ladite unité de commande (4) comprend en outre un écran (46) monté sur ledit boîtier (41), et couplé à et commandé par ledit organe de commande (45) pour afficher sur ce dernier des informations associées au fonctionnement dudit organe de commande (45).

7. Dispositif d'alimentation électrique multifonction (200) selon la revendication 1, **caractérisé en outre en ce que** ledit organe de commande (45) de ladite unité de commande (4) peut fonctionner pour permettre audit haut-parleur (48) de générer une alarme audio émise en réponse au signal de commande reçu par ce dernier.

8. Dispositif d'alimentation électrique multifonction (200) selon la revendication 1, **caractérisé en outre en ce que** ladite unité de commande (4) comprend en outre un composant d'éclairage (49) monté sur ledit boîtier (41) et couplé audit organe de commande (45), ledit organe de commande (45) pouvant fonctionner pour permettre audit composant d'éclairage (49) d'émettre de la lumière en réponse au signal de commande reçu par ce dernier.

9. Dispositif d'alimentation électrique multifonction (200) selon la revendication 1, **caractérisé en outre en ce que** ladite unité de commande (4) comprend en outre une antenne (50) couplé audit organe de commande (45), ledit organe de commande pouvant fonctionner pour transmettre un signal radio par le biais de ladite antenne (50) en réponse au signal de commande reçu par ce dernier.
